# EUROPEAN PATENT APPLICATION

(11) **EP 4 675 918 A2**
(43) Date of publication of application: **07.01.2026**
(21) Application number: 25174650.9
(22) Date of filing: 06.05.2025
(51) Int. Cl.: H02S 30/20, H02S 30/10

(54) **AEROSPACE PANEL ASSEMBLIES FOR MODULAR SOLAR ARRAYS AND METHODS**

(30) Priority: 28.06.2024 US 202418757853
(71) Applicant: The Boeing Company, Arlington, VA 22202 (US)
(72) Inventor: ASTON, Richard W., Arlington, 22202 (US); WOODS, Emily C., Arlington, 22202 (US); BOTTENBERG, Juliana M., Arlington, 22202 (US); PEARSON, Mara, Arlington, 22202 (US)
(74) Representative: Bryn-Jacobsen, Caelia

(57) **Abstract**

A modular solar array includes a plurality of panels, a splice connector, and a solar cell. Each one of the panels includes a first face sheet, a second face sheet, and a truss structure. The first face sheet includes a first lattice region. The second face sheet is spaced apart from the first face sheet. The truss structure connects the first face sheet and the second face sheet. The splice connector is coupled to directly adjacent ones of the panels. The solar cell is coupled to the second face sheet of each at least one of the panels.

## Description

### FIELD

The present disclosure relates generally to aerospace structures and solar energy collectors and, more particularly, to additively manufactured aerospace panels and methods for manufacturing modular solar arrays using aerospace panels.

### BACKGROUND

Solar power from photovoltaic cells, also called solar cells, is used for various space and terrestrial solar power applications. Typically, an array of solar cells is mounted on or supported by a composite substrate. However, such composite substrates have a complex layering structure, which is expensive to produce and requires a long lead time. Further, such composite substrates are not adaptable to different solar cell array configurations after fabrication. Accordingly, those skilled in the art continue with research and development efforts in modular solar energy collectors.

### SUMMARY

Disclosed are examples of a modular solar array, a modular panel assembly, and a method for manufacturing a modular solar array and/or a modular panel assembly. The following is a non-exhaustive list of examples, which may or may not be claimed, of the subject matter according to the present disclosure.

In an example, the disclosed modular solar array includes a plurality of panels, a splice connector, and a solar cell. Each one of the panels includes a first face sheet, a second face sheet, and a truss structure. The first face sheet includes a first lattice region. The second face sheet is spaced apart from the first face sheet. The truss structure connects the first face sheet and the second face sheet. The splice connector is coupled to directly adjacent ones of the panels. The solar cell is coupled to the second face sheet of each at least one of the panels.

In an example, the disclosed modular panel assembly includes a plurality of panels and a splice connector. Each one of the panels includes a first face sheet, a second face sheet, and a truss structure. The first face sheet includes a first lattice region. The second face sheet is spaced apart from the first face sheet. The truss structure connects the first face sheet and the second face sheet. The splice connector is coupled to directly adjacent ones of the panels.

In another example, the disclosed modular solar array includes the modular panel assembly and a solar cell coupled to the second face sheet of each of the panels of the modular panel assembly.

In an example, the disclosed method includes steps of: (1) additively manufacturing a plurality of panels, each one of the panels 104 includes a first face sheet including a first lattice region, a second face sheet spaced apart from the first face sheet, and a truss structure connecting the first face sheet and the second face sheet; (2) coupling each one of the panels to a directly adjacent one of the panels using a splice connector; and (3) coupling a solar cell to the second face sheet of at least one of the panels.

In another example, the disclosed method includes steps of: (1) additively manufacturing a plurality of panels, each one of the panels 104 includes a first face sheet including a first lattice region, a second face sheet spaced apart from the first face sheet, and a truss structure connecting the first face sheet and the second face sheet; and (2) coupling each one of the panels to a directly adjacent one of the panels using a splice connector.

Other examples of the modular solar array, the modular panel assembly, and the method will become apparent from the following detailed description, the accompanying drawings, and the appended claims.

### BRIEF DESCRIPTION OF THE DRAWINGS

Fig. 1 is a schematic block diagram of an example of a modular solar array;
Fig. 2 is a flow diagram of an example of a method for manufacturing a modular solar array;
Fig. 3 is a schematic, perspective, exploded view of an example of a portion of the modular solar array;
Fig. 4 is a schematic, perspective, exploded view of another example of a portion of the modular solar array;
Fig. 5 is a schematic, perspective view of an example of the modular solar array;
Fig. 6 is a schematic, elevation view of an example of a portion of the modular solar array;
Fig. 7 is a schematic, perspective view of an example of a plurality of panels of a modular panel assembly used to form the modular solar array;
Fig. 8 is a schematic, perspective view of an example of the plurality of panels connected by a splice connector to form the modular panel assembly;
Fig. 9 is a schematic, perspective, partially exploded view of an example of portion of the modular panel assembly and splice connector shown in Fig. 8;
Fig. 10 is a schematic, plan view of an example of a portion of the modular panel assembly depicting a first splice connector;
Fig. 11 is a schematic, plan view of an example of a portion of the modular panel assembly depicting a second splice connector;
Fig. 12 is a schematic, plan view of an example of a portion of a splice connection of the modular panel assembly depicting the first splice connector and second splice connector;
Fig. 13 a schematic, elevation view of an example of a portion of the modular solar array depicting an example of the splice connection of the modular panel assembly;
Fig. 14 is a schematic, perspective view of an example of one of the panels of the modular panel assembly;
Fig. 15 is a flow diagram of an example of a manufacturing and service method; and
Fig. 16 is a schematic block diagram of an example of an aerospace vehicle.

### DETAILED DESCRIPTION

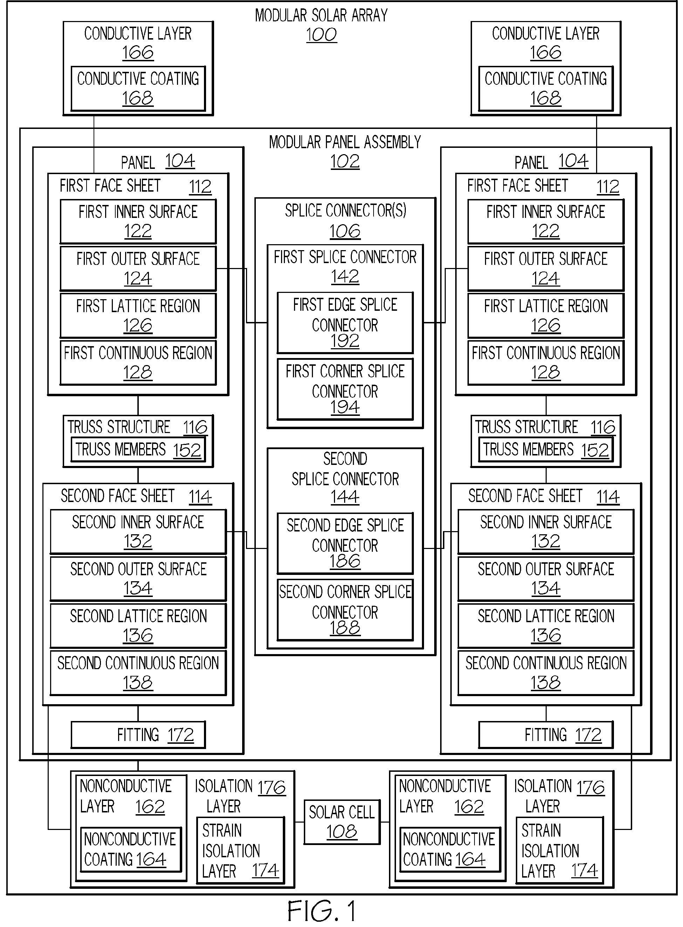

Referring generally to Figs. 1-14, by way of examples, the present disclosure is directed to a modular solar array 100, a modular panel assembly 102 used to form the modular solar array 100, and a method 1000 for manufacturing the modular solar array 100 and/or the modular panel assembly 102 for the modular solar array 100. In various examples, the modular solar array 100 includes an arrangement of additively manufactured panels 104 and solar cells 108 that are assembled to form a solar collector of any size.

In various examples, the additively manufactured panels (e.g., panels 104) include a pair of face sheets (e.g., first face sheet 112 and second face sheet 114) that are connected by a micro-truss core structure (e.g., truss structure 116). In various examples, at least a portion of one or both of the face sheets includes a lattice structure (e.g., first lattice region 126 and second lattice region 136). In various examples, the panels are joined via one or more splice fittings (e.g., splice connectors 106).

The modular solar arrays 100 and modular panel assembly 102 disclosed herein offer a variety of benefits and advantages compared to traditional solar array manufacturing. In various examples, the modular panel assembly 102 advantageously enables modular design and assembly of the modular solar array 100. In various examples, the panels 104 of the modular panel assembly 102 used for the modular solar array 100 advantageously accommodate wiring, cables, connectors, and other operational components associated with the support one solar cell 108, which can be situated under solar cell 108 and/or be routed through the first lattice region 126 of the first face sheet 112, the second lattice region 136 of the second face sheet 114, and/or the truss structure 116. In various examples, the modular solar array 100 advantageously enables highly efficient heat transfer (e.g., versus conventional composite substrate) because the solar cell 108 can radiate heat directly to space through the lattice structures and core truss structure of the panels 104, rather than conducting through a honeycomb core. In various examples, the modular solar arrays 100 advantageously enables enhanced cooling of the solar cells 108, which can increase power generation of the solar array. In various examples, the modular panel assembly 102 advantageously enables design flexibility in multiple dimensions, including modularity, panel size, face sheet thickness, truss core thickness, panel thickness, panel geometry, panel symmetry, and the like, which provides selectively variable face sheet thicknesses and core densities at no additional manufacturing cost. In various examples, each one of the panels 104 can be designed using a predetermined geometric increment (e.g., 1 inch) and additively manufactured to include a suitable number of geometric increments. The manufactured panels 104 can then be tailored and assembled in a suitable configuration or array for connection of one or more solar cells 108 to form the modular solar arrays 100 of any feasible desired size (e.g., 13" x 13", 15" x 19", etc.). In various examples, additively manufacturing the panels 104 of the modular solar arrays 100 advantageously eliminates the use of composite substrates, which are the longest lead item for solar collectors. In various examples, additively manufacturing the panels 104 advantageously provides fittings that are integral to the panel structure, which eliminates the requirements for bonding and proof loading embedded fittings that tend to delaminate under temperature extremes. In various examples, the modular solar arrays 100 advantageously eliminates the need for a co-bonded polyimide films (e.g., Kapton^{®}) for use as an isolation layer, which is prone to delamination.

Referring now to Figs. 1 and 3-14, the following are examples of the modular solar array 100 and the modular panel assembly 102, according to the present disclosure. The modular solar array 100 and the modular panel assembly 102 include a number of elements, features, and components, including any combination of one or more panels 104, one or more solar cells 108, the first face sheet 112 including the first lattice region 126 and a first continuous region 128, the second face sheet 114 including the second lattice region 136 and a second continuous region 138, the truss structure 116, one or more splice connectors 106 including a first splice connector 142, a first edge splice connector 192, a first corner splice connector 194, a second splice connector 144, a second edge splice connector 186, and a second corner splice connector 188, an isolation layer 176, a nonconductive layer 162, a nonconductive coating 164, a strain isolation layer 174, a conductive layer 166, a conductive coating 168, and one or more fittings 172. Not all of the elements, features, and/or components described or illustrated in one example are required in that example. Some or all of the elements, features, and/or components described or illustrated in one example can be combined with other examples in various ways without the need to include other elements, features, and/or components described in those other examples, even though such combination or combinations are not explicitly described or illustrated by example herein.

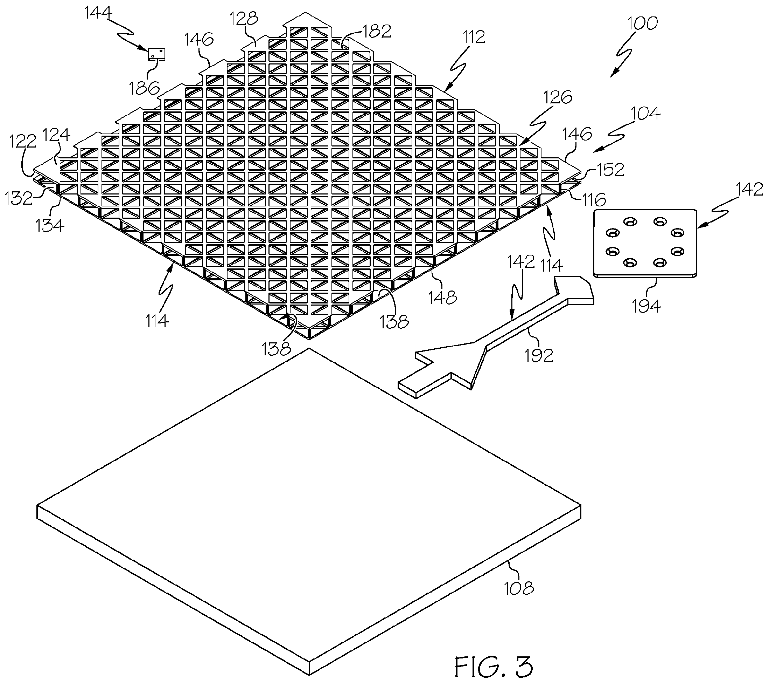

Fig.3 illustrates an example of various components of modular solar array 100. In the illustrated example, the panel 104 includes the first face sheet 112 and the second face sheet 114 connected by the truss structure 116. The first face sheet 112 includes the first lattice region 126 and the first continuous region 128. The second face sheet 114 includes the second continuous region 138. The second face sheet 114 is configured for coupling the solar cell 108. At least one first splice connector 142 is used to couple the first face sheets 112 of directly adjacent ones of the panels 104. At least one second splice connector 144 is used to couple the second face sheets 114 of directly adjacent ones of the panels 104.

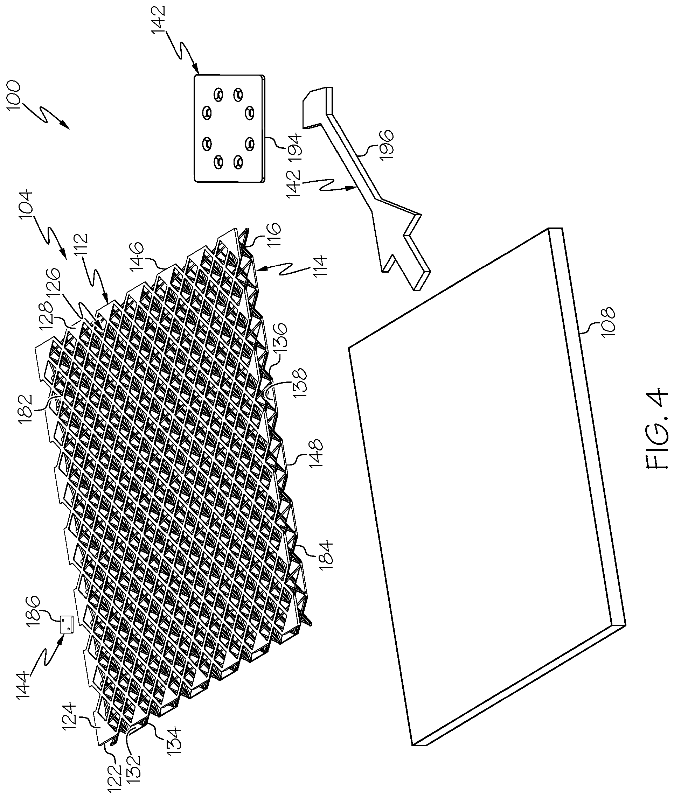

Fig. 4 illustrates another example of various components of modular solar array 100. In the illustrated example, the first face sheet 112 includes the first lattice region 126 and the first continuous region 128. The second face sheet 114 includes the second lattice region 136 and the second continuous region 138. The second face sheet 114 is configured for coupling the solar cell 108. At least one first splice connector 142 is used to couple the first face sheets 112 of directly adjacent ones of the panels 104. At least one second splice connector 144 is used to couple the second face sheets 114 of directly adjacent ones of the panels 104.

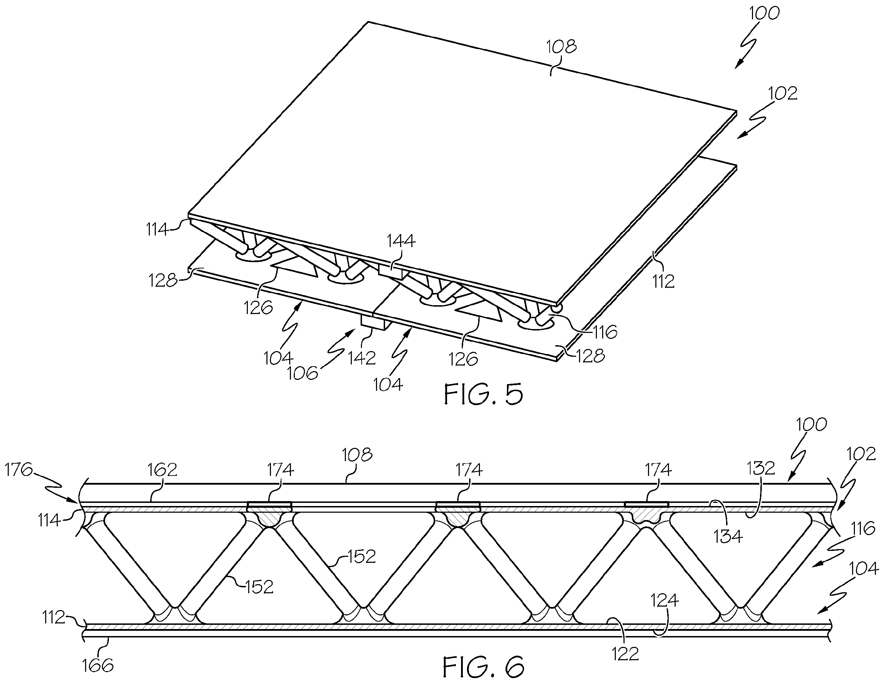

Fig. 5 illustrates an example of the modular solar array 100 made using the modular panel assembly 102. In the illustrated example, two of the panels 104 are coupled together using the splice connector 106, including at least one first splice connector 142 that couples the first face sheets 112 of the panels 104 and at least one second splice connector 144 that couples the second face sheets 114 of directly adjacent ones of the panels 104. The solar cell 108 is coupled to the second face sheet 114. The first face sheet 112 includes the first lattice region 126 and the first continuous region 128.

Fig. 6 illustrates an example of a portion of the modular solar array 100 made using the modular panel assembly 102. In the illustrated example, the panel 104 includes the first face sheet 112 and the second face sheet 114 connected by the truss structure 116. In one or more examples, the isolation layer 176 includes at least one of the nonconductive layer 162 and/or the strain isolation layer 174 and is coupled to the second face sheet 114. The solar cell 108 is coupled to the isolation layer 176. The conductive layer 166 is coupled to the first face sheet 112.

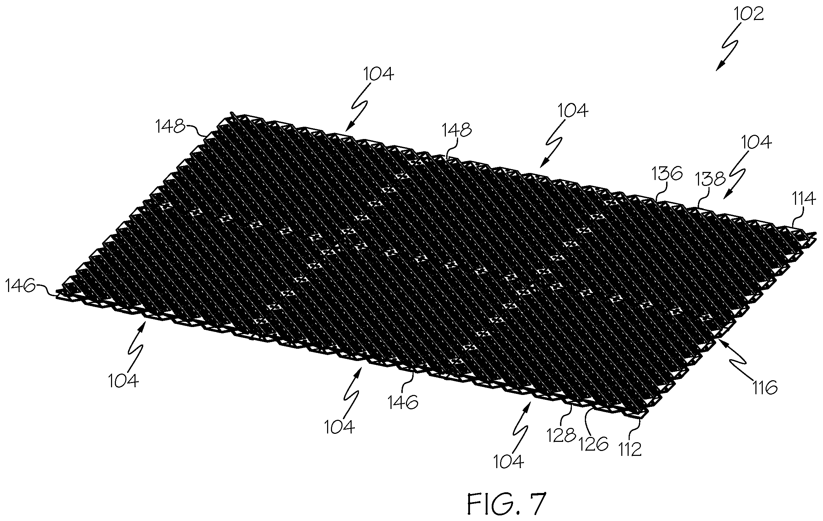

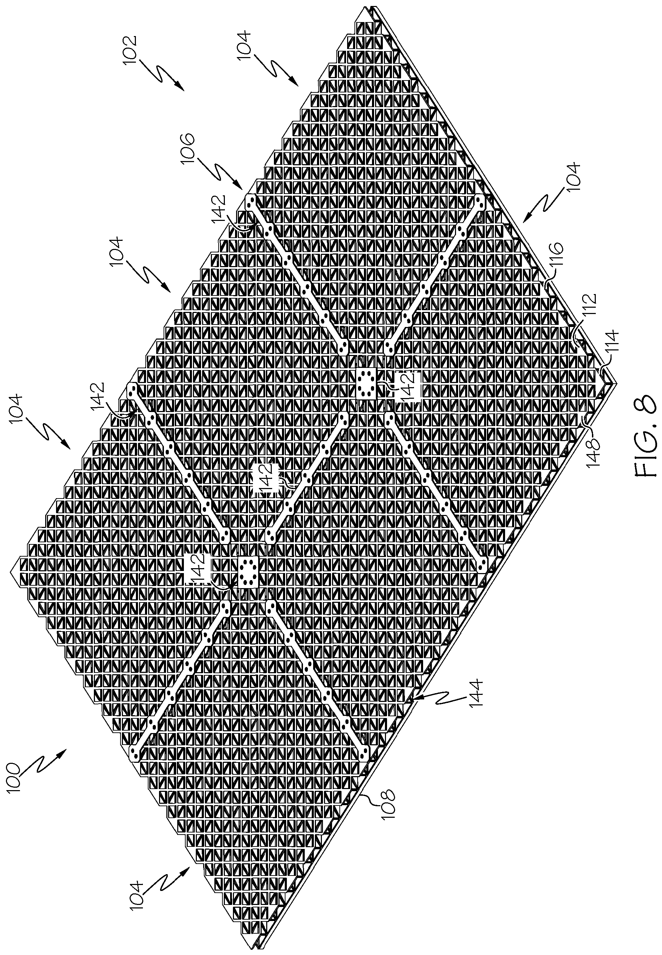

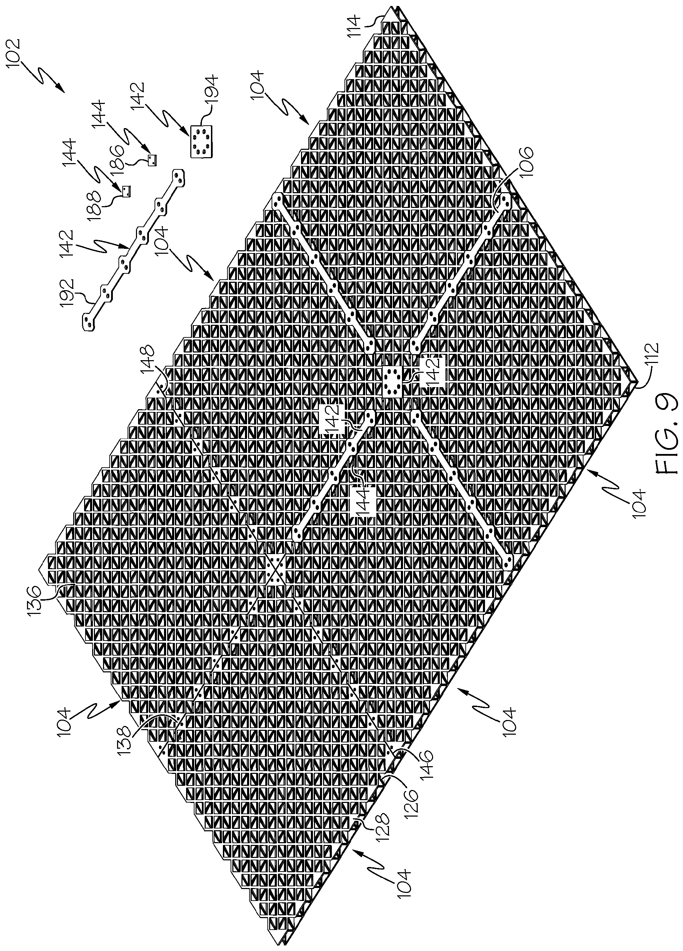

Figs. 7-9 illustrate examples of a plurality of the panels 104 arranged to form the modular panel assembly 102 (Fig. 7). In the illustrated example, each panel 104 includes the first face sheet 112 and the second face sheet 114 connected by the truss structure 116. The first face sheet 112 includes the first lattice region 126 and the first continuous region 128. The second face sheet 114 includes the second lattice region 136 and the second continuous region 138. The second face sheet 114 is configured for coupling at least one solar cell 108 to form the modular solar array 100 (Fig. 8). The first continuous region 128 extends along the first perimeter edge 146 of the first face sheet 112 of each one of the panels 104 for connection of the first splice connectors 142 (Figs. 8 and 9). The second continuous region 138 extends along the second perimeter edge 148 of the second face sheet 114 of each one of the panels 104 for connection of the second splice connectors 144 (Figs. 8 and 9).

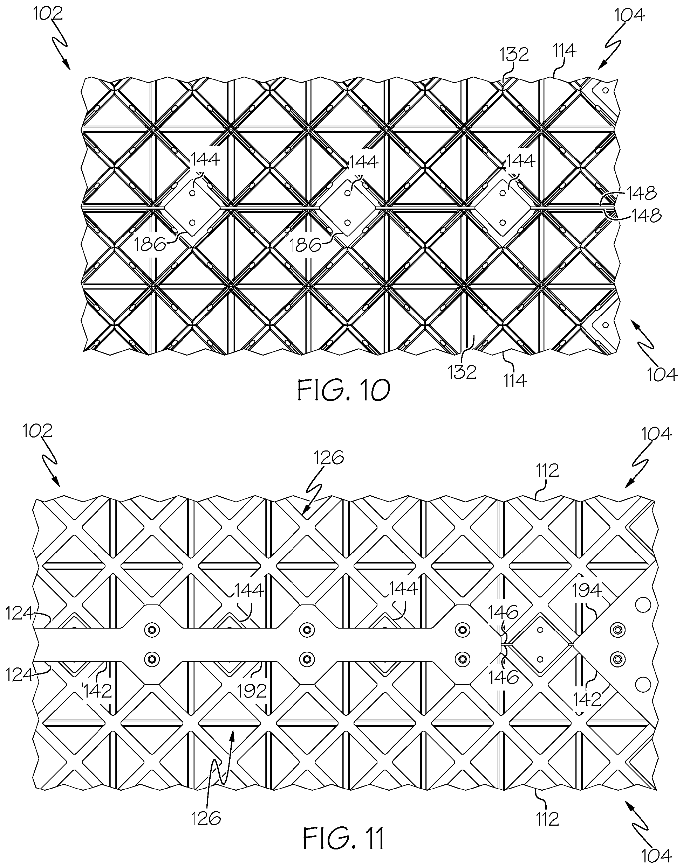

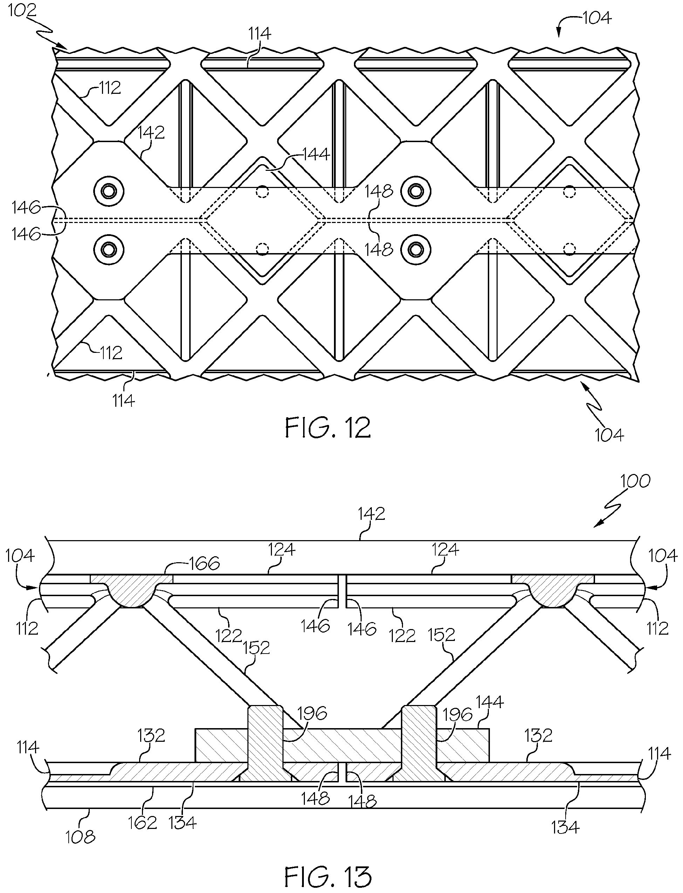

Figs. 10-13 illustrate various examples of the splice connection used to connect directly adjacent ones of the panels 104. In the illustrated examples, each panel 104 includes the first face sheet 112 and the second face sheet 114 connected by the truss structure 116. The first face sheet 112 includes the first lattice region 126 and the first continuous region 128 (Figs. 11 and 12). The second face sheet 114 includes the second continuous region 138 (Figs. 10 and 12). The second face sheet 114 is configured for coupling at least one solar cell 108 to form the modular solar array 100 (Fig. 13). The first continuous region 128 extends along the first perimeter edge 146 of the first face sheet 112 of each one of the panels 104 for connection of the first splice connectors 142 (Figs. 11 and 12). The second continuous region 138 extends along at least the second perimeter edge 148 of the second face sheet 114 of each one of the panels 104 for connection of the second splice connectors 144 (Figs. 10 and 12).

In the example illustrated in Figs. 10, 12 and 13, a plurality of the second splice connectors 144 is coupled to the second inner surfaces 132 of the second face sheets 114 of the adjacent panels 104 at the second continuous regions 138 of the second face sheets 114 extending along the mating second perimeter edges 148 of the second face sheets 114. In the illustrated example, the second splice connectors 144 include one or more second edge splice connectors 186.

In the example illustrated in Figs. 11-13, a plurality of the first splice connectors 142 is coupled to the first outer surfaces 124 of the first face sheets 112 of the adjacent panels 104 at the first continuous regions 128 of the first face sheets 112 extending along the mating first perimeter edges 146 of the first face sheets 112. In the illustrated example, the second splice connectors 144 include one or more first edge splice connectors 192 and one or more first corner splice connectors 194.

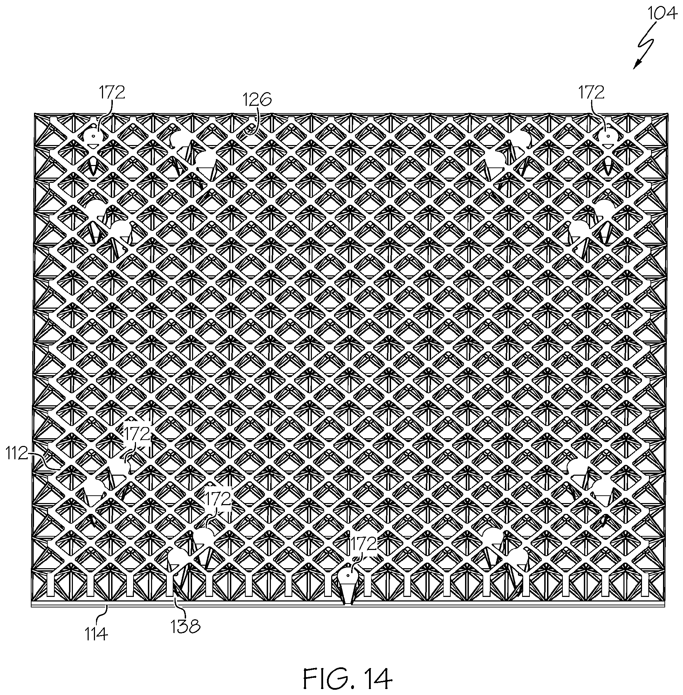

Fig. 14 illustrates another example of one of the panels 104 of the modular panel assembly 102 used to form the modular solar array 100. In the illustrated examples, the panel 104 includes the first face sheet 112 and the second face sheet 114 connected by the truss structure 116. The first face sheet 112 includes the first lattice region 126. The second face sheet 114 includes the second continuous region 138. The second face sheet 114 is configured for coupling at least one solar cell 108 to form the modular solar array 100. One or more fittings 172 (e.g., mechanical fitting, bushing, insert, etc.) are provided and configured for coupling the panel 104 to a support structure, such as a support arm or boom of a spacecraft or satellite.

Referring to Figs. 1 and 3-14, in one or more examples, a number of the panels 104 are assembled and coupled together using a number of the splice connectors 106, such as the first splice connectors 142 and the second splice connectors 144 coupled to the first face sheets 112 and the second face sheets 114 to transfer panel-to-panel shear.

In one or more examples, the second face sheets 114 are spliced along inner-surfaces using second edge splice connectors 186 and/or second corner splice connectors 188 to transfer panel-to-panel shear. In one or more examples, the shape (e.g., square or diamond) of the second edge splice connectors 186 and/or the second corner splice connector 188 is configured to match the shape (e.g., square) of adjoined grids of the second continuous regions 138 of adjacent second face sheets 114.

In one or more examples, the first face sheets 112 are spliced along outer-surfaces using first edge splice connectors 192. In one or more examples, the finger-doubler shape (e.g., squares or diamonds connected by rectangular strap sections) of the first edge splice connectors 192 is configured to match the shape (e.g., square) of adjoined grids of the first continuous regions 128 of adjacent first face sheets 112 to transfer load and preclude four bar linkage mechanism behavior.

In one or more examples, the first face sheets 112 are also spliced along outer-surfaces using first corner splice connectors 194 to transfer panel-to-panel shear. In one or more examples, the shape (e.g., square or diamond) of the first corner splice connector 194 is configured to match the shape (e.g., square) of adjoined grids of the first continuous regions 128 of adjacent first face sheets 112.

In one or more examples, the panels 104 are assembled using full sized determinant assembling and precision holes formed in the panels 104 and the splice connectors 106 requiring no shimming or match drilling. In one or more examples, the splice connectors 106 (e.g., the at first splice connectors 142 and/or the second splice connectors 144) are coupled to respective face sheets of the panel 104 using mechanical fasteners (e.g., fasteners 196, such as bolts, shown in Fig. 13).

Referring to Figs. 1 and 3-14, in one or more examples, the modular solar array 100 includes a plurality of panels 104, one or more splice connectors 106, and one or more solar cells 108. Each one of the panels 104 includes the first face sheet 112, the second face sheet 114, and the truss structure 116. The second face sheet 114 is spaced apart from the first face sheet 112. The truss structure 116 connects the first face sheet 112 and the second face sheet 114. The splice connector 106 is coupled to directly adjacent ones of the panels 104. The solar cell 108 is coupled to the second face sheet 114 of each at least one of the panels 104.

In one or more examples, the first face sheet 112 and the second face sheet 114 are at least approximately parallel to each other. In one or more examples, the panel 104, the first face sheet 112, and the second face sheet 114 may be understood to have a planar extent. As an example, the panel 104, the first face sheet 112, and the second face sheet 114 are generally planar when viewed along at least orthogonal axis or direction. For example, the panel 104 can take the form of a flat panel. In one or more examples, the panel 104, the first face sheet 112, and the second face sheet 114 have curvature and/or more complex geometry. As an example, the panel 104, the first face sheet 112, and the second face sheet 114 can be non-planar or otherwise include some degree or curvature or contour in one or more directions.

In one or more examples, at least a portion of the first face sheet 112 along the first perimeter edge 146 of one panel 104 is configured to match a profile and align with at least a portion of the first face sheet 112 along the first perimeter edge 146 of an adjacent panel 104 such that the first splice connector 142 can extend across the aligned first perimeter edges 146 of the panels 104. In one or more examples, at least a portion of the second face sheet 114 along the second perimeter edge 148 of one panel 104 is configured to match a profile and align with at least a portion of the second face sheet 114 along the second perimeter edge 148 of an adjacent panel 104 such that the second splice connector 144 can extend across the aligned second perimeter edges 148 of the panels 104.

In one or more examples, the truss structure 116 is connected to the first face sheet 112 and to the second face sheet 114. The first face sheet 112 and the second face sheet 114 are in turn connected to one another by the truss structure 116. In one or more examples, the truss structure 116 includes a plurality of the truss members 152. In one or more examples, opposed ends of one or more of truss members 152 is coupled to the first face sheet 112 and the second face sheet 114. In one or more examples, opposed ends of each truss member 152 is integral with the first face sheet 112 and the second face sheet 114, such that the first face sheet 112, the second face sheet 114, and the truss structure 116 collectively form a single, monolithic joint-free structure.

Examples of the modular solar array 100 and the modular panel assembly 102 can include any number of panels 104. The panels 104 are coupled together in a desired arrangement or configuration using one or more of the splice connectors 106 based on the intended use or application of the modular solar array 100. Examples of the modular solar array 100 can include any number of splice connectors 106, for example, depending on the number and arrangement of the panels 104. Examples of the modular solar array 100 can include any number of solar cells 108. In one or more examples, one of the solar cells 108 is coupled to an associated one of the panels 104. In these examples, the panels 104 are sized to correspond to the size of one solar cell 108 such that one panel 104 is sized to support one solar cell 108. In other examples, one of the solar cells 108 is coupled to more than one of the panels 104. In these examples, the panels 104 are sized such that a plurality of panels 104 support one solar cell 108.

Referring to Figs. 1 and 3, 4, 6 and 13, in one or more examples, the first face sheet 112 of each one of the panels 104 includes the first inner surface 122 and the first outer surface 124 that is opposite the first inner surface 122. The first face sheet 112 includes the first lattice region 126. In one or more examples, the first face sheet 112 also includes the first continuous region 128. The splice connector 106 includes the first splice connector 142, which is coupled to the first continuous region 128 at the first outer surface 124 of each of the directly adjacent ones of the panels 104.

In various examples, the layout, geometry, and arrangement of the first lattice region 126 and the first continuous region 128 of the first face sheet 112 provide a number of advantages, including reducing the weight of the panel 104, locating structural support where needed, accommodating passage of wiring and other electrical components through the first face sheet 112, facilitating enhanced thermal transfer, and the like.

In one or more examples, the first continuous region 128 extends along at least a portion of the first perimeter edge 146 of the first face sheet 112. In one or more examples, the first continuous region 128 extends along an entirety of the first perimeter edge 146 of the first face sheet 112. The first continuous region 128 provides a solid, rigid, and/or continuous section of material for support and connection of the first splice connector 142 between adjacent panels 104.

In one or more examples, the first splice connector 142 is configured (e.g., sized and shaped) to run along at least a portion of the mating first perimeter edges 146 of the first face sheets 112 of directly adjacent panels 104. In one or more examples, the first splice connector 142 includes at least one first edge splice connector 192. The first edge splice connector 192 is configured for connecting two directly adjacent panels 104. The first edge splice connector 192 is configured (e.g., sized and shaped) to fit on the first continuous regions 128 of the first face sheets 112 along at least a portion of two mating first perimeter edges 146 of two directly adjacent panels 104. In one or more examples, the first splice connector 142 includes at least one first corner splice connector 194. The first corner splice connector 194 is configured (e.g., sized and shaped) to fit on the first continuous regions 128 of the first face sheets 112 along at least a portion of four mating first perimeter edges 146 of four directly adjacent panels 104.

Referring to Figs. 1 and 3, 4, 6 and 13, in one or more examples, the second face sheet 114 of each one of the panels 104 includes the second inner surface 132 and the second outer surface 134 that is opposite the second inner surface 132. The second face sheet 114 includes the second continuous region 138. In one or more examples, the second face sheet 114 also includes the second lattice region 136. The splice connector 106 includes the second splice connector 144, which is coupled to the second continuous region 138 at the second inner surface 132 of each of the directly adjacent ones of the panels 104.

In various examples, the layout, geometry, and arrangement of the second lattice region 136 and the second continuous region 138 of the second face sheet 114 provide a number of advantages, including reducing the weight of the panel 104, locating structural support where needed, accommodating passage of wiring and other electrical components through the second face sheet 114, facilitating enhanced thermal transfer, and the like.

In various examples, the layout, geometry, and arrangement of the first lattice region 126 and the first continuous region 128 of the first face sheet 112 and of the second lattice region 136 and the second continuous region 138 of the second face sheet 114 provide a number of advantages, including reducing the weight of the panel 104, locating structural support where needed, accommodating passage of wiring and other electrical components through the first face sheet 112, facilitating enhanced thermal transfer, and the like. As an example, the double lattice configuration of the first face sheet 112 and the second face sheet 114 can be designed to have or provide a thermal view factor through the thickness of panel 104. This arrangement can advantageously provide additional radiant cooling and increase solar cell performance. Functionally, the solar array points the solar cells towards the sun such that the backside of the array faces cold space. As such, radiating off the back side of the panel is advantageous. Conventional solar arrays need to conduct energy through the underlaying support substrate and through adhesives and polymer reinforced carbon fiber, which are not good thermal conductors.

In one or more examples the second continuous region 138 extends along at least a portion of the second perimeter edge 148 of the second face sheet 114. In one or more examples the second continuous region 138 extends along an entirety of the second perimeter edge 148 of the second face sheet 114. In one or more examples, the second continuous region 138 forms an entirety of the second face sheet 114. The second continuous region 138 provides a solid, rigid, and/or continuous section of material for support and connection of the second splice connector 144 between adjacent panels 104.

In one or more examples, the second splice connector 144 is configured (e.g., sized and shaped) to run along at least a portion of the mating second perimeter edges 148 of the second face sheets 114 of directly adjacent panels 104. In one or more examples, the second splice connector 144 includes at least one second edge splice connector 186. The second edge splice connector 186 is configured for connecting two directly adjacent panels 104. The second edge splice connector 186 is configured (e.g., sized and shaped) to fit on the second continuous regions 138 of the second face sheets 114 along at least a portion of two mating second perimeter edges 148 of two directly adjacent panels 104. In one or more examples, the second splice connector 144 includes at least one second corner splice connector 188. The second corner splice connector 188 is configured (e.g., sized and shaped) to fit on the second continuous regions 138 of the second face sheets 114 along at least a portion of four mating second perimeter edges 148 of four directly adjacent panels 104.

In one or more examples, the second splice connector 144 is configured (e.g., sized and/or shaped) to fit though or between the first lattice region 126 of the first face sheet 112 and/or through the truss structure 116 for situating the second splice connector 144 on and connecting the second splice connector 144 to the second inner surface 132 of the second face sheet 114. Situating the second splice connector 144 on and connecting the second splice connector 144 to the second inner surface 132 of the second face sheet 114 ensures that the second outer surfaces 134 of the panels 104 forming the modular panel assembly 102 are planar and generally flat and smooth for connection of the solar cell 108.

Referring to Figs. 1, 6 and 13, in one or more examples, the modular solar array 100 includes the isolation layer 176. In one or more examples, the isolation layer 176 includes the nonconductive layer 162. In these examples, the nonconductive layer 162 is disposed between the second face sheet 114 and the solar cell 108. In one or more examples, the nonconductive layer 162 is coupled to the second outer surface 134 of the second face sheet 114. In one or more examples, the nonconductive layer 162 includes the nonconductive coating 164. The nonconductive coating 164 is applied to at least a portion (e.g., one or more select portions or an entirety) of the second outer surface 134 of the second face sheet 114. The nonconductive layer 162 is configured for insulating (e.g., isolating) the solar cell 108 from the metallic material of the second face sheet 114. In one or more examples, the nonconductive layer 162 is electrically nonconductive (e.g., electrically isolating layer). In one or more examples, the nonconductive layer 162 is thermally nonconductive (e.g., thermally isolating layer). In one or more examples, the nonconductive layer 162 includes an epoxy material or coating, such as an epoxy primer spray. In one or more examples, the nonconductive layer 162 includes a dielectric material or coating, such as a dielectric primer spray.

Referring to Figs. 1, 6 and 13, in one or more examples, the isolation layer 176 includes the strain isolation layer 174. In these examples, strain isolation layer 174 is disposed between the second face sheet 114 and the solar cell 108. In one or more examples, the strain isolation layer 174 is coupled to the second outer surface 134 of the second face sheet 114. In one or more examples, the strain isolation layer 174 is applied to at least a portion (e.g., one or more select portions or an entirety) of the second outer surface 134 of the second face sheet 114. The strain isolation layer 174 is configured for accommodating differences in the coefficient of thermal expansion between the panel 104 (e.g., the second face sheet 114) and the solar cell 108. In one or more examples, the strain isolation layer 174 includes a sheet or film applied to the second outer surface 134. In one or more examples, the strain isolation layer 174 includes one or more strips of material applied to select regions of the second outer surface 134, such as along the second continuous region 138 of the second face sheet 114. In one or more examples, the strain isolation layer 174 includes a plurality of pads applied to nodes of intersection of the second lattice region 136 of the second face sheet 114. In these examples, the strain isolation layer 174, in any one of various forms or configurations, can have various two-dimensional shapes and thicknesses. As an example, the pads of the strain isolation layer 174 can have a thickness of between approximately 0.06 inch (1.5 millimeters) and approximately 0.125 inch (3.1 millimeters). In one or more examples, the strain isolation layer 174 includes an elastomeric material. In one or more examples, the strain isolation layer 174 includes a polymeric material. In one or more examples, the strain isolation layer 174 includes a foam material. In one or more examples, the strain isolation layer 174 includes a polyimide material (e.g., Kapton^{®}). In one or more examples, the strain isolation layer 174 includes a silicone material, such as room temperature vulcanizing (RTV) silicone. In one or more examples, the strain isolation layer 174 includes a natural or synthetic rubber material.

Referring to Figs. 1, 6 and 13, in one or more examples, the isolation layer 176 includes both the nonconductive layer 162 and the strain isolation layer 174. In these examples, the nonconductive layer 162 and the strain isolation layer 174 are integrated into a single functional layer that is disposed between the second face sheet 114 and the solar cell 108. In these examples, the isolation layer 176 (e.g., the nonconductive layer 162 and the strain isolation layer 174) is configured for providing electrical isolation, thermal isolation, and strain isolation (e.g., strain relief due to the thermal expansion differences).

Referring to Figs. 1, 6 and 13, in one or more examples, the modular solar array 100 includes the conductive layer 166. The conductive layer 166 is disposed on the first face sheet 112. In one or more examples, the conductive layer 166 is coupled to the first outer surface 124 of the first face sheet 112. In one or more examples, the conductive layer 166 includes the conductive coating 168. The conductive coating 168 is applied to at least a portion (e.g., one or more select portions or an entirety) the first outer surface 124 of the first face sheet 112. In one or more examples, the conductive layer 166 is thermally conductive and/or is configured for thermal transfer and emittance. In one or more examples, the conductive layer 166 includes a thermal emittance coating, such as white paint.

Referring to Figs. 1 and 14, in one or more examples of the modular solar array 100, at least one the panels 104 includes at least one fitting 172. Each panel 104 can include any number of fittings 172. The fitting 172 is configured for attaching the panel 104 to an external support. In one or more examples, at least one of the fittings 172 is additively manufactured with and integral to the panel 104 (e.g., at least the first face sheet 112. In one or more examples, the fitting 172 is integral with the first face sheet 112. In one or more examples, the fittings 172 is integral with the second face sheet 114. In one or more examples, the fittings 172 is integral with the truss structure 116. In one or more examples, the fittings 172 is integral with two or more of the first face sheet 112, the second face sheet 114, and the truss structure 116. In one or more examples, the fittings 172 can extend between the first face sheet 112 and the second face sheet 114. The fittings 172 can include fitting, bushings, inserts and other configurations suitable for fastening or coupling the panel 104 to the support structure. Additively manufacturing the fittings 172 into the panel 104 advantageously results in a significant part count reduction and reduces assembly time, in process binding, workmanship proof loading of bonds, and the like.

Referring to Figs. 1, 6 and 13, in one or more examples, the truss structure 116 includes a plurality of truss members 152. Each one of the truss members 152 is integral with the first face sheet 112 and the second face sheet 114.

In one or more examples, each of the panels 104 is additively manufactured. Additive manufacturing enables the panels 104 to be made in various dimensions and configurations depending on the electrical output requirements of the modular solar array 100. Additive manufacturing also enables the geometry and relative locations and arrangement of the first lattice region 126 and the first continuous region 128 of the first face sheet 112 and the second lattice region 136 and the second continuous region 138 of the second face sheet 114 to be selectively controlled depending on the structural, weight, and thermal transfer requirements of the modular solar array 100. In one or more examples, the panels 104 are additively manufactured from a metallic allow, such as a high strength aluminum alloy, using laser powderbed fusion, which provides a yield strength of greater than 50 ksi. However, in other examples, other metallic materials and/or other additive manufacturing processes can be used to manufacture the panels 104.

In one or more examples, the modular solar array 100 includes the modular panel assembly 102, as described herein, and at least one solar cell 108 coupled to the second face sheet 114 of each of the panels 104 of the modular panel assembly 102.

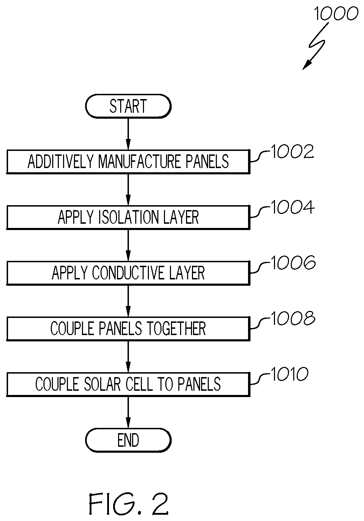

Referring now to Fig. 2, the following are examples of the method 1000, according to the present disclosure. The method 1000 includes a number of elements, steps, operations, or processes. Not all of the elements, steps, operations, or processes described or illustrated in one example are required in that example. Some or all of the elements, steps, operations, or processes described or illustrated in one example can be combined with other examples in various ways without the need to include other elements, steps, operations, or processes described in those other examples, even though such combination or combinations are not explicitly described or illustrated by example herein.

Referring generally to Figs. 1 and 3-14 and particularly to Fig. 2, in one or more examples, the method 1000 is implemented for manufacturing the modular solar array 100. In one or more examples, the method 1000 is implemented for manufacturing the modular solar array 100 using the modular panel assembly 102. In one or more examples, the method 1000 is implemented for manufacturing the modular panel assembly 102.

In one or more examples, the method 1000 includes a step of additively manufacturing 1002 a plurality of the panels 104. Each one of the panels 104 includes the first face sheet 112 including the first lattice region 126, the second face sheet 114 spaced apart from the first face sheet 112, and the truss structure 116 connecting the first face sheet 112 and the second face sheet 114.

In one or more examples, according to the method 1000, the step of additively manufacturing 1002 each of the panels 104 includes a step of additively manufacturing the first face sheet 112. The step of additively manufacturing 1002 each of the panels 104 also includes a step of additively manufacturing the truss structure 116 integrally with the first face sheet 112. The step of additively manufacturing 1002 each of the panels 104 further includes a step of additively manufacturing the second face sheet 114 integrally with the truss structure 116.

In one or more examples, the each of the panels (104) is additively manufactured from a metallic alloy using laser powder fusion.

In one or more examples, the step of additively manufacturing 1002 includes a step of simultaneously additively manufacturing a plurality of the panels 104 in a vertical orientation. As such, in these examples, the plurality of panels 104 can be additively manufactured (e.g., printed) together in the vertical orientation (i.e., rather than one at a time in a horizontal orientation). This technique can advantageously enable multiple panels 104 to be printed together and assembled. This technique also advantageously enables the use of smaller additive manufacturing devices (e.g., printers), which can be used to build the array. As such, the panel construction forming the array does not require a single very large and expensive printer. Small panels printed together on a smaller printer and quickly assembled also provide cost advantages over larger machines.

In one or more examples, according to the method 1000, the step of additively manufacturing the first face sheet 112 includes a step of additively manufacturing a plurality of first lattice grid squares 182. In one or more examples, according to the method 1000, the step of additively manufacturing the truss structure 116 includes a step of additively manufacturing a plurality of truss members 152 integrally with the first lattice grid squares 182. In one or more examples, according to the method 1000, the step of additively manufacturing the second face sheet 114 includes a step of additively manufacturing a plurality of second lattice grid squares 184 integrally with the truss members 152.

In one or more examples, according to the method 1000, the step of additively manufacturing 1002 each of the panels 104 includes a step of additively manufacturing the fitting 172 integrally with the first face sheet 112.

In one or more examples, the method 1000 includes a step of applying 1004 the isolation layer 176 to the second outer surface 134 of the second face sheet 114 of at least one or each of the panels 104. As an example, the step of applying 1004 includes applying the nonconductive layer 162, such as the nonconductive coating 164, to the second outer surface 134 of the second face sheet 114 of each of the panels 104. As another example, the step of applying 1004 includes applying the strain isolation layer 174 to the second outer surface 134 of the second face sheet 114 of each of the panels 104.

In one or more examples, the method 1000 includes a step of applying 1006 the conductive layer 166, such as the conductive coating 168, to the first outer surface 124 of the first face sheet 112 of each of the panels 104.

In one or more examples, the method 1000 includes a step of coupling 1008 each one of the panels 104 to a directly adjacent one of the panels 104 using the splice connector 106. In one or more examples, the panels 104 of the modular panel assembly 102 are constructed with full size determinate assembly (FSDA), with no match-drilled holes, so the modular panel assembly 102 can be simply bolted together.

In one or more examples, according to the method 1000, the first face sheet 112 of each one of the panels 104 includes the first inner surface 122 and the first outer surface 124, which is opposite the first inner surface 122. The first face sheet 112 also includes the first continuous region 128. In these examples, the step of coupling 1008 each one of the panels 104 to the directly adjacent one of the panels 104 includes a step of coupling the first splice connector 142 to the first continuous region 128 at the first outer surface 124 of each of the panels 104.

In one or more examples, according to the method 1000, the second face sheet 114 of each one of the panels 104 includes the second inner surface 132 and the second outer surface 134, which is opposite the second inner surface 132. The second face sheet 114 also includes the second continuous region 138. In these examples, the step of coupling 1008 each one of the panels 104 to the directly adjacent one of the panels 104 includes a step of coupling the second splice connector 144 to the second continuous region 138 at the second inner surface 132 of each of the panels 104.

In one or more examples, the method 1000 includes a step of coupling 1010 the solar cell 108 to the second face sheet 114 of at least one of the panels 104.

Referring generally to Figs. 1-14, in various examples, the panels 104 of the modular panel assembly 102 and/or the /100 are additively manufactured, which provides a number of unique manufacturing and structural characteristics and benefits. The following description relates to examples and arrangements of the panel structures created by the additive manufacturing process.

In one or more examples, the truss structure 116 includes or is formed by an array of core structures. Each one of core structures includes or takes the form of a framework of the truss members 152 having any appropriate geometry. In one or more examples, the geometry of core structures is uniform over the panel 104. In one or more examples, the geometry of core structures varies according to location along the panel 104. For example, core structures can vary according to expected non-uniform loading of panel 104 and/or core structures can vary according to a curvature of panel 104, the first face sheet 112, and/or the second face sheet 114. In one or more examples, the core structures are arranged in a grid, a repeating pattern, and/or in any effective manner.

In one or more examples, at least a portion of the first face sheet 112 has at least one lattice region (e.g., first lattice region 126). In one or more examples, at least a portion of the second face sheet 114 includes at least one lattice region (e.g., second lattice region 136). In these examples, the lattice region defines or takes the form of a lattice (e.g., a lattice structure). Generally, in one or more examples, the lattice of the lattice region is configured to eliminate secondary printing support during additive manufacture of the panel 104. The lattice of the lattice region includes a grid of lattice members and an array of openings. The lattice includes or takes the form of a pattern or structure made of strips of material (e.g., lattice members) that cross over each other, thereby leaving holes (e.g., openings) in between. In one or more examples, the strips of material (e.g., lattice members) of the lattice cross over each other in a grid, perpendicularly, diagonally, or a combination thereof.

In one or more examples, the panel 104 is additively manufactured, or 3D-printed, as a single, unitary structure. As such, the panel 104 may also be described as monolithic. In other words, the first face sheet 112, the second face sheet 114, and the truss structure 116 are additively manufactured, or printed, together and the panel 104 is formed of printed material without joints or seams. As such, the panel 104 may have a build axis. As the panel 104 is printed, layers of material are deposited in a plane perpendicular to the build axis. In one or more examples, the build axis is parallel to the planar extent of the first face sheet 112 and/or the second face sheet 114. In such examples, the panel 104 may also be described as being printed with the first face sheet 112 and the second face sheet 114 in a vertical orientation. Consequently, in such examples, the first face sheet 112, the second face sheet 114, and the truss structure 116 may all be printed concurrently rather than sequentially.

In one or more examples, the truss members 152 of the truss structure 116, or of each core structure, are oriented and/or shaped relative to the build axis such that truss members 152 are self-supporting during printing. That is, each core structure can be printed without need for secondary supports or removal of supporting material subsequent to printing. In one or more examples, the truss members 152 extend at an angle of no more than forty-five degrees relative to the build axis. In one or more examples, the panel 104 includes additional structures and/or features. In such examples, each structure and/or feature may be oriented, shaped, and/or configured to be self-supporting during printing. The panel 104 may be configured for manufacture without post-processing such as machining subsequent to printing.

In one or more examples, at least a portion of the first face sheet 112 and, optionally, at least a portion of the second face sheet 114 includes or is formed of the lattice region and continuous (or skin) region. In one or more examples, the first continuous region 128 includes of forms a boundary portion of the first face sheet 112 and the remaining interior portion of first face sheet 112 is formed by the first lattice region 126. Similarly, in one or more examples, the second continuous region 138 includes of forms a boundary portion of the second face sheet 114 and the remaining interior portion of second face sheet 114 is formed by the second lattice region 136.

In the illustrated examples, the continuous regions are generally located along and form the perimeter edges of the face sheets and surround the lattice regions. However, in other examples, any one or more of the perimeter edges of either of the face sheets can be formed entirely by the lattice region or can have a portion formed by the continuous region and a portion formed by the lattice region. Additionally, in other examples, a portion of the continuous region of the face sheet can located on an interior portion and/or surrounded by the lattice region between the perimeter portions formed by the continuous region.

In various examples, the lattice regions and the continuous regions of the first face sheet 112 and/or the second face sheet 114 can have any one of various patterns, layouts, or configurations. The pattern, layout, or configuration of one or more lattice regions and one or more continuous regions can depend on the size of the panel 104, the end use or application of the panel 104, the attachment locations (e.g., fittings 172) of the panel 104 to another structure, and the like.

Regardless of the layout or configuration of the lattice region and the continuous region, the first face sheet 112 and the second face sheet 114 are connected to the truss structure 116 and are connected to each other by the truss structure 116. In one or more examples, regions of face sheets formed from continuous regions are coupled to or integral with ends of the truss members 152. In one or more examples, regions of face sheets formed from the lattice region are coupled to or integral with ends of the truss member 152.

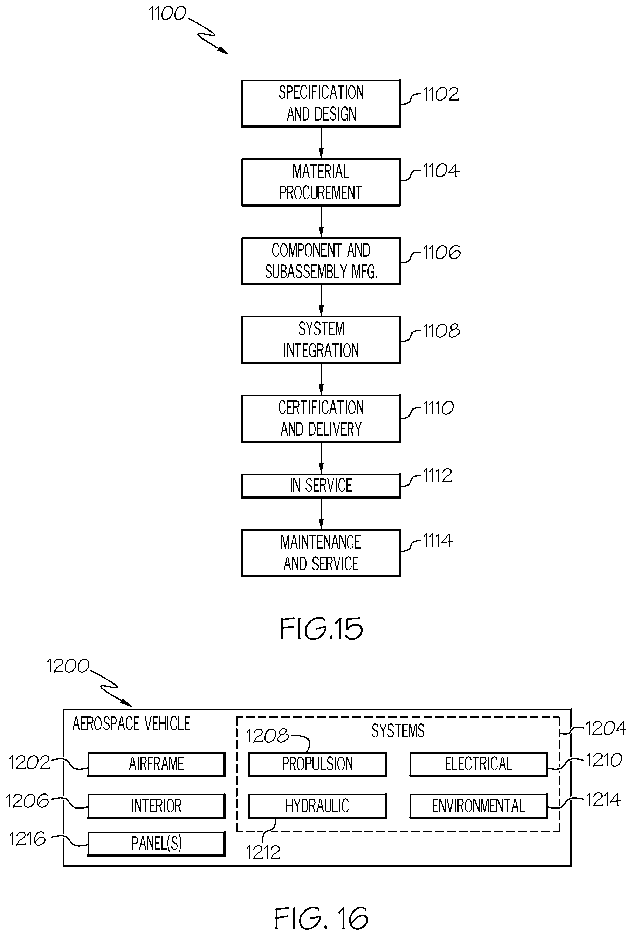

Referring now to Figs. 15 and 16, examples of the modular solar array 100, the modular panel assembly 102, and the method 1000 described herein, may be related to, or used in the context of, the aerospace manufacturing and service method 1100, as shown in the flow diagram of Fig. 15 and an aerospace vehicle 1200, as schematically illustrated in Fig. 16. As an example, the aerospace vehicle 1200 and/or the manufacturing and service method 1100 may include or utilize examples of the modular solar array 100 and/or the modular panel assembly 102 manufactured according to examples of the method 1000.

Referring to Fig. 16, which illustrates an example of the aerospace vehicle 1200. The aerospace vehicle 1200 can be any aerospace vehicle or platform. In one or more examples, the aerospace vehicle 1200 includes the airframe 1202 having the interior 1206. The aerospace vehicle 1200 includes a plurality of onboard systems 1204 (e.g., high-level systems). Examples of the onboard systems 1204 of the aerospace vehicle 1200 include propulsion systems 1208, hydraulic systems 1212, electrical systems 1210, and environmental systems 1214. In other examples, the onboard systems 1204 also includes one or more control systems of the aerospace vehicle 1200. In yet other examples, the onboard systems 1204 also include one or more other systems, such as, but not limited to, communications systems, avionics systems, software distribution systems, network communications systems, passenger information/entertainment systems, guidance systems, radar systems, weapons systems, and the like. The aerospace vehicle 1200 can have any number of modular solar arrays 100, components assembled using modular panel assemblies 102, or other types of additively manufactured modular panels 1216 (e.g., panels 104).

Referring to Fig. 15, during pre-production of the aerospace vehicle 1200, the manufacturing and service method 1100 includes specification and design 1102 of the aerospace vehicle 1200 and material procurement 1104. During production of the aerospace vehicle 1200, component and subassembly manufacturing 1106 and system integration 1108 of the aerospace vehicle 1200 take place. Thereafter, the aerospace vehicle 1200 goes through certification and delivery 1110 to be placed in service 1112. Routine maintenance and service 1114 includes modification, reconfiguration, refurbishment, etc. of one or more systems of the aerospace vehicle 1200.

Each of the processes of the manufacturing and service method 1100 illustrated in Fig. 15 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

Examples of the modular solar array 100, the modular panel assembly 102, and the method 1000, shown and described herein, may be employed during any one or more of the stages of the manufacturing and service method 1100 shown in the flow diagram illustrated by Fig. 15. In an example, the modular solar array 100 of the aerospace vehicle 1200 can be manufactured, assembled, and/or installed during a portion of component and subassembly manufacturing 1106 and/or system integration 1108. Further, the modular solar array 100 can be manufactured, assembled, and/or installed while the aerospace vehicle 1200 is in service 1112. Also, the modular solar array 100 can be manufactured, assembled, and/or installed during system integration 1108 and certification and delivery 1110. Similarly, the modular solar array 100 can be manufactured, assembled, and/or installed while the aerospace vehicle 1200 is in service 1112 and during maintenance and service 1114.

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic, and/or operational step described in connection with the example is included in at least one aspect, embodiment, and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, the phrase "at least one of," when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of" may be, for example, without limitation, two of item A, one of item B, and ten of item C; four of item B and seven of item C; and other suitable combinations. As used herein, the term "and/or" and the "/" symbol includes any and all combinations of one or more of the associated listed items.

For the purpose of this disclosure, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

Figs. 1, 3-14 and 16, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features, and/or components described and illustrated in Figs. 1, 3-14 and 16, referred to above, need be included in every example and not all elements, features, and/or components described herein are necessarily depicted in each illustrative example. Accordingly, some of the elements, features, and/or components described and illustrated in Figs. 1, 3-14 and 16 may be combined in various ways without the need to include other features described and illustrated in Figs. 1, 3-14 and 16, other drawing figures, and/or the accompanying disclosure, even though such combination or combinations are not explicitly illustrated herein. Similarly, additional features not limited to the examples presented, may be combined with some or all of the features shown and described herein. Unless otherwise explicitly stated, the schematic illustrations of the examples depicted in Figs. 1, 3-14 and 16, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features, and/or components that serve a similar, or at least substantially similar, purpose are labeled with like numbers in each of Figs. 1, 3-14 and 16, and such elements, features, and/or components may not be discussed in detail herein with reference to each of Figs. 1, 3-14 and 16. Similarly, all elements, features, and/or components may not be labeled in each of Figs. 1, 3-14 and 16, but reference numerals associated therewith may be utilized herein for consistency.

In Figs. 2 and 15, referred to above, the blocks may represent operations, steps, and/or portions thereof and lines connecting the various blocks do not imply any particular order or dependency of the operations or portions thereof. It will be understood that not all dependencies among the various disclosed operations are necessarily represented. Figs. 2 and 15 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

Further, references throughout the present specification to features, advantages, or similar language used herein do not imply that all of the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages, and similar language used throughout the present disclosure may, but does not necessarily, refer to the same example.

Further examples are set out in the clauses below:
1. A modular solar array comprising:
   a plurality of panels, each one of the panels comprising: a first face sheet comprising a first lattice region; a second face sheet spaced apart from the first face sheet; and a truss structure connecting the first face sheet and the second face sheet; a splice connector coupled to directly adjacent ones of the panels; and a solar cell coupled to the second face sheet of each at least one of the panels.
2. The modular solar array of Clause 1, wherein:
   the second face sheet of each one of the panels further comprises: a second inner surface;
   a second outer surface opposite the second inner surface; and a second continuous region; and
   the splice connector comprises a second splice connector coupled to the second continuous region at the second inner surface of each of the directly adjacent ones of the panels.
3. The modular solar array of Clause 2, wherein the second face sheet further comprises a second lattice region.
4. The modular solar array of Clause 2 or 3, wherein the second continuous region extends along at least a portion of a second perimeter edge of the second face sheet.
5. The modular solar array of Clause 2, further comprising a nonconductive layer disposed between the second face sheet and the solar cell.
6. The modular solar array of any eon of Clauses 2-4, further comprising a strain isolation layer disposed between the second face sheet and the solar cell.
7. The modular solar array of any one of the preceding Clauses, wherein:
   the first face sheet of each one of the panels comprises: a first inner surface;
   a first outer surface opposite the first inner surface; and a first continuous region; and
   the splice connector comprises a first splice connector coupled to the first continuous region at the first outer surface of each of the directly adjacent ones of the panels.
8. The modular solar array of Clause 7, wherein the first continuous region extends along at least a portion of a first perimeter edge of the first face sheet.
9. The modular solar array of Clause 7, further comprising a conductive layer disposed on the first face sheet.
10. The modular solar array of any one of the preceding Clauses, wherein each of the panels is additively manufactured from a metallic alloy using laser powder fusion.
11. The modular solar array of Clause 10, wherein at least one of the panels comprises a fitting that is additively manufactured with and integral to at least the first face sheet.
12. A modular panel assembly comprising: a plurality of panels, each one of the panels comprising: a first face sheet comprising a first lattice region; a second face sheet spaced apart from the first face sheet; and a truss structure connecting the first face sheet and the second face sheet; and a splice connector coupled to directly adjacent ones of the panels.
13. The modular panel assembly of Clause 12, wherein: the first face sheet of each one of the panels further comprises: a first inner surface; a first outer surface opposite the first inner surface; and a first continuous region; the second face sheet of each one of the panels comprises:
   a second inner surface; a second outer surface opposite the second inner surface; and
   a second continuous region; and the splice connector comprises:
      a first splice connector coupled to the first continuous region at the first outer surface of each of the directly adjacent ones of the panels; and a second splice connector coupled to the second continuous region at the second inner surface of each of the directly adjacent ones of the panels.
14. The modular panel assembly of Clause 13, wherein the second face sheet further comprises a second lattice region.
15. The modular panel assembly of any one of Clauses 12-14, wherein:
   each of the panels is additively manufactured from a metallic alloy using laser powder fusion; and
   at least one the panels comprises a fitting that is additively manufactured with and integral to at least the first face sheet.
16. A modular solar array comprising:
   the modular panel assembly of any one of Clauses 12-15; and a solar cell coupled to the second face sheet of each of the panels of the modular panel assembly.
17. A method for manufacturing a modular solar array, the method comprising:
   additively manufacturing a plurality of panels, wherein each one of the panels comprising:
   a first face sheet comprising a first lattice region; a second face sheet spaced apart from the first face sheet; and a truss structure connecting the first face sheet and the second face sheet;
   coupling each one of the panels to a directly adjacent one of the panels using a splice connector;
   and coupling a solar cell to the second face sheet of at least one of the panels.
18. The method of Clause 17, wherein: the first face sheet of each one of the panels comprises:
   a first inner surface; a first outer surface opposite the first inner surface; and
   a first continuous region; the second face sheet of each one of the panels further comprises:
      a second inner surface; a second outer surface opposite the second inner surface; and
      a second continuous region; coupling each one of the panels to the directly adjacent one of the panels comprises coupling a first splice connector to the first continuous region at the first outer surface of each of the panels; and coupling each one of the panels to the directly adjacent one of the panels comprises coupling a second splice connector to the second continuous region at the second inner surface of each of the panels.
19. The method of Clause 18, further comprising applying at least one of:
   a nonconductive layer to at least a portion of the second outer surface of the second face sheet of each of the panels; a strain isolation layer to at least a portion of the second outer surface of the second face sheet of each of the panels; and a conductive layer to at least a portion of the first outer surface of the first face sheet of each of the panels.
20. The method of Clause 17, wherein: additively manufacturing each of the panels comprises:
   additively manufacturing the first face sheet; additively manufacturing the truss structure integrally with the first face sheet; and additively manufacturing the second face sheet integrally with the truss structure; each of the panels is additively manufactured from a metallic alloy using laser powder fusion; and
   a plurality of the panels is manufactured simultaneously in a vertical orientation.

The described features, advantages, and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of the modular solar array 100, the modular panel assembly 102, and the method 1000 have been shown and described, modifications may occur to those skilled in the art upon reading the specification. The present application includes such modifications and is limited only by the scope of the claims.

## Claims

1. A modular solar array (100) comprising:
a plurality of panels (104), each one of the panels (104) comprising:
a first face sheet (112) comprising a first lattice region (126);
a second face sheet (114) spaced apart from the first face sheet (112); and
a truss structure (116) connecting the first face sheet (112) and the second face sheet (114);
a splice connector (106) coupled to directly adjacent ones of the panels (104); and
a solar cell (108) coupled to the second face sheet (114) of each at least one of the panels (104).

2. The modular solar array (100) of Claim 1, wherein:
the second face sheet (114) of each one of the panels (104) further comprises:
a second inner surface (132);
a second outer surface (134) opposite the second inner surface (132); and
a second continuous region (138); and
the splice connector (106) comprises a second splice connector (144) coupled to the second continuous region (138) at the second inner surface (132) of each of the directly adjacent ones of the panels (104).

3. The modular solar array (100) of Claim 2, wherein the second face sheet (114) further comprises a second lattice region (136).

4. The modular solar array (100) of Claim 2 or 3, wherein the second continuous region (138) extends along at least a portion of a second perimeter edge (148) of the second face sheet (114).

5. The modular solar array (100) of any one of Claims 2-4, further comprising a nonconductive layer (162) disposed between the second face sheet (114) and the solar cell (108); or optionally further comprising a strain isolation layer (174) disposed between the second face sheet (114) and the solar cell (108).

6. The modular solar array (100) of any one of the preceding Claims, wherein:
the first face sheet (112) of each one of the panels (104) comprises:
a first inner surface (122);
a first outer surface (124) opposite the first inner surface (122); and
a first continuous region (128); and
the splice connector (106) comprises a first splice connector (142) coupled to the first continuous region (128) at the first outer surface (124) of each of the directly adjacent ones of the panels (104).

7. The modular solar array (100) of Claim 6, wherein the first continuous region (128) extends along at least a portion of a first perimeter edge (146) of the first face sheet (112); and optionally further comprising a conductive layer (166) disposed on the first face sheet (112).

8. The modular solar array (100) of any one of the preceding Claims, wherein each of the panels (104) is additively manufactured from a metallic alloy using laser powder fusion; and optionally wherein at least one of the panels (104) comprises a fitting (172) that is additively manufactured with and integral to at least the first face sheet (112).

9. A modular panel assembly (102) comprising:
a plurality of panels (104), each one of the panels (104) comprising:
a first face sheet (112) comprising a first lattice region (126);
a second face sheet (114) spaced apart from the first face sheet (112); and
a truss structure (116) connecting the first face sheet (112) and the second face sheet (114); and
a splice connector (106) coupled to directly adjacent ones of the panels (104).

10. The modular panel assembly (102) of Claim 9, wherein:
the first face sheet (112) of each one of the panels (104) further comprises:
a first inner surface (122);
a first outer surface (124) opposite the first inner surface (122); and
a first continuous region (128);
the second face sheet (114) of each one of the panels (104) comprises:
a second inner surface (132);
a second outer surface (134) opposite the second inner surface (132); and
a second continuous region (138); and
the splice connector (106) comprises:
a first splice connector (142) coupled to the first continuous region (128) at the first outer surface (124) of each of the directly adjacent ones of the panels (104); and
a second splice connector (144) coupled to the second continuous region (138) at the second inner surface (132) of each of the directly adjacent ones of the panels (104); or optionally
wherein the second face sheet (114) further comprises a second lattice region (136).

11. The modular panel assembly (102) of Claim 9, wherein:
each of the panels (104) is additively manufactured from a metallic alloy using laser powder fusion; and
at least one the panels (104) comprises a fitting (172) that is additively manufactured with and integral to at least the first face sheet (112).

12. A modular solar array (100) comprising:
the modular panel assembly (102) of Claim 12; and
a solar cell (108) coupled to the second face sheet (114) of each of the panels (104) of the modular panel assembly (102).

13. A method (1000) for manufacturing a modular solar array (100), the method (1000) comprising:
additively manufacturing a plurality of panels (104), wherein each one of the panels (104) comprising:
a first face sheet (112) comprising a first lattice region (126);
a second face sheet (114) spaced apart from the first face sheet (112); and
a truss structure (116) connecting the first face sheet (112) and the second face sheet (114);
coupling each one of the panels (104) to a directly adjacent one of the panels (104) using a splice connector (106); and
coupling a solar cell (108) to the second face sheet (114) of at least one of the panels (104).

14. The method (1000) of Claim 13, wherein:
the first face sheet (112) of each one of the panels (104) comprises:
a first inner surface (122);
a first outer surface (124) opposite the first inner surface (122); and
a first continuous region (128);
the second face sheet (114) of each one of the panels (104) further comprises:
a second inner surface (132);
a second outer surface (134) opposite the second inner surface (132); and
a second continuous region (138);
coupling each one of the panels (104) to the directly adjacent one of the panels (104) comprises coupling a first splice connector (142) to the first continuous region (128) at the first outer surface (124) of each of the panels (104); and
coupling each one of the panels (104) to the directly adjacent one of the panels (104) comprises coupling a second splice connector (144) to the second continuous region (138) at the second inner surface (132) of each of the panels (104); or optionally
further comprising applying at least one of:
a nonconductive layer (162) to at least a portion of the second outer surface (134) of the second face sheet (114) of each of the panels (104);
a strain isolation layer (174) to at least a portion of the second outer surface (134) of the second face sheet (114) of each of the panels (104); and
a conductive layer (166) to at least a portion of the first outer surface (124) of the first face sheet (112) of each of the panels (104).

15. The method (1000) of Claim 13, wherein:
additively manufacturing each of the panels (104) comprises:
additively manufacturing the first face sheet (112);
additively manufacturing the truss structure (116) integrally with the first face sheet (112); and
additively manufacturing the second face sheet (114) integrally with the truss structure (116);
each of the panels (104) is additively manufactured from a metallic alloy using laser powder fusion; and
a plurality of the panels (104) is manufactured simultaneously in a vertical orientation.
